# EUROPEAN PATENT SPECIFICATION

(11) **EP 3 318 119 B1**
(45) Date of publication and mention of the grant of the patent: **11.03.2020**
(21) Application number: 16197595.8
(22) Date of filing: 07.11.2016
(51) Int. Cl.: A01G 23/093, C10B 53/02

(54) **METHOD FOR IMPROVING SOIL FERTILITY**
PROCÉDÉ POUR AMÉLIORER LA FERTILITÉ DU SOL
VERFAHREN ZUR VERBESSERUNG DER BODENFRUCHTBARKEIT

(43) Date of publication of application: 09.05.2018
(73) Proprietor: Obrist Engineering GmbH, 6890 Lustenau (AT)
(72) Inventor: OBRIST, Frank, 6900 Bregenz (AT); WOLF, Frank, 6900 Bregenz (AT); SCHLÖGL, Robert, 10825 Berlin (DE)
(74) Representative: Kilchert, Jochen

(56) References cited:
- JP-A- 2006 233 022
- RU-C1- 2 529 171
- US-A- 3 996 980
- US-A- 5 641 129
- US-A1- 2008 178 569
- US-A1- 2012 103 781
- US-A1- 2014 374 233
- US-B1- 7 373 960

## Description

The invention relates to a method for improving the fertility of the soil. The invention further relates to a mobile apparatus for improving the fertility of the soil via said method.

### Background

Since the start of the industrial revolution in the 1800's atmospheric CO2 concentration has increased from a previously stable 280 ppmv (parts per million by volume) to 390 ppmv at the beginning of the 21st century. Such a rate of increase is predicted to continue or increase if techniques are not implemented to bring carbon emissions under control.

The recently ratified Paris Agreement outlines a main goal to hold the increase in global average temperature to below 2°C above pre-industrial levels requiring a reduction of CO2 emissions to zero by 2050. Proposals aimed at limiting said emissions include the use of biofuels, solar power and wind turbines. Methods for producing biofuels are disclosed, e.g., in US 2014/0374233 A1 and US 2012/0103781 A1.

The use of biofuels takes advantage of the natural cycle of carbon in which plants absorb CO2 during photosynthesis and remove it from the atmosphere (over 100 billion tons of carbon is absorbed by plants via this method each year). The biofuel then releases said carbon back into the atmosphere when said fuel is burned for fuel, or naturally during decay.

Whilst many of the solutions outlined above are carbon-neutral and therefore are useful techniques for minimising additional CO2 added to the atmosphere, none address the concentration of CO2 already present within the atmosphere or any additional emissions added by fossil fuels between now and a date in the future in which ideally all energy sources are carbon-neutral. Many techniques proposed for carbon-sequestration require a timely setup and completely new infrastructures and thus their implementation may not be realized fully until midway through the 21st century, by which time the CO2 levels may have risen to between 450-600 ppmv and the temperature increased by up to 5°C.

It is therefore imperative that new techniques and technologies are developed that may be implemented in a short time frame and that are capable of reducing the CO2 levels in the atmosphere with immediate effect.

A potential method of CO2 reduction is the use of carbon sequestration to remove carbon from the current natural carbon cycle by storing the wood underground in a stable reservoir where anaerobic conditions slows decomposition and prevents emissions from being released into the atmosphere. The main drawbacks of this method are that the process of burying the wood underground is a timely process and may be costly.

An alternative to regular carbon capture and sequestration systems is the use of biochar, a charcoal made from biomass via pyrolysis which may increase soil fertility and increased vegetation productivity via increased soil retention of moisture and plant available nitrogen.

In the October 21 issue of Nature Communications Woolf et al demonstrate that biochar could play an important role in removal of carbon from the atmosphere, which is increasingly recognized at essential to meeting global climate targets. Biochar-bioenergy systems were compared with bioenergy alone and gasification-based bioenergy with carbon capture and storage, known as BECCS. In its 2014 report, IPCC flags BECCS as the only major land-based approach expected to draw down atmospheric carbon dioxide.

However, it was demonstrated that biochar-bioenergy systems that sequester carbon in agricultural lands could reduce carbon sequestration costs, allowing earlier adoption of a more aggressive policy of actively removing carbon from the atmosphere to avert dangerous climate change. Biochar-bioenergy competes favourably with BECCS at lower carbon prices, and where biochar addition to soils delivers significant increases in crop yields. Thus, effective use of biochar as a carbon removal strategy relies on identifying those sites that are most responsive to biochar. This requires similar knowledge systems as those commonly in place around the world to guide fertilizer application.

Averaged across all published scientific experiments, biochar increases crop yields around 20% with application rates often exceeding 10 t/ha (tonne per hectare). However, applications of less than 5 t/ha can increase crop yields by over 50% in certain types of soils. Even highly productive agricultural lands contain patches of degraded soils that would benefit from biochar application. Precision agriculture can deliver biochar to specific field locations where it can provide the greatest soil benefits. Biomass energy in combination with carbon sequestration has enormous potential as a carbon removal strategy.

However, biomass is a widely dispersed resource best suited to small-scale, distributed bioenergy systems. In contrast, sequestration of carbon dioxide is necessarily a large, centralized operation to enable separation and injection of carbon dioxide into carefully selected geological deposits. This mismatch in scale between bioenergy production and carbon dioxide sequestration is a challenge for gasification-based BECCS.

### Method

It is an object of the present invention to provide a method for improving the fertility of the soil. Furthermore it is desired that said method does not require large infrastructure for processing. Further, it is desirable that said method will improve the fertility of the soil in which regrowth occurs. Furthermore, it is an object of the present invention to provide a mobile apparatus for improving the fertility of the soil via such a method.

In accordance with the invention said object is achieved by the subject matter of claim 1 (method) and the subject matter of claim 4 (apparatus).

Said coking process as an example may be performed by pyrolysis in which pure hydrogen and carbon may be generated by separating hydrocarbons in a plasma burner at around 1600°C.

The method according to the present invention allows for the steps outlined to be performed continuously by a mobile vehicle. This continuous operation allows for biochar to be distributed across the area from which the wood was originally harvested. This allows the method to be highly efficient as the mobile vehicle is not required to revisit an area to distribute the generated biochar.

The inventive method is able to process wood from fully grown and younger trees. It is also possible use only wood from fully grown trees that are detected and selectively harvested by the vehicle.

According to the inventive method, after the wood has been shred, the shredded wood is subject to a drying treatment that consists of squeezing the shredded wood in a squeezing unit.

The use of squeezing as a drying method is advantageous as it is a highly efficient method in which drying may be performed without requiring the wood to be heated and thus potentially release some of the carbon stored within the wood into the atmosphere. It is also much quicker than regular drying. The extracted liquid may be then distributed to the soil.

Preferably, the shredded wood is dried to reduce the moisture content to less than 30%, further preferably to less than 20%, and even more preferably to less than 10%. Moisture content of these percentages allow for the wood to be in a state optimum for undergoing the subsequent coking process.

The open area created may be subject to natural regrowth of plants, in particular trees. This may occur via contributions from nearby foliage, such as seeds falling into the open area from neighbouring plants. This allows the plants such as trees to regrow without requiring human input such as using machinery for replanting. This provides the advantage that the cycle of tree regrowth, and consequently the removal of CO2 from the atmosphere, occurs naturally and thus an extra step to perform such a task (likely requiring the use of machinery and further fossil fuels) may be avoided.

The open area may be treated to allow growth or regrowth of plants, in particular trees. The regrowth of plants, in particular trees may be encouraged via treatment of the open are for example via replanting.

The wood to be harvested by the harvesting unit may be harvested from trees which still have branches and leaves attached. Preferably, these branches and leaves are separated during the harvesting step, shredded and directly conveyed to the soil. The branches and leaves when conveyed directly to the soil can improve the fertility and health of the soil. This ensures that whilst these smaller features (and thus less carbon rich) do not undergo the choking process, they provide additional benefits to the open area for regrowth of plants, in particular trees.

According to a further embodiment the process gas of the coking step can be treated in an intelligent way so as to insert a maximal proportion of carbon by carbonizing wood and tree residues into the soil. This step results in an activation of humus formation and, thus, contributes to a further increase of carbon storage in the soil.

### Mobile apparatus

The present invention also relates to a mobile apparatus for improving the fertility of the soil having a plurality of interconnected processing units comprising at least: a harvesting unit for harvesting wood in a forest to form an open area for growing plants, a shredding unit for shredding the harvested wood, a coking unit for coking the shredded wood to form biochar, an insertion unit for inserting the biochar into the soil of the open area, and an energy conversion unit for converting the heat generated by the coking unit into operating power for the processing units. Furthermore, the interconnected processing units form a continuous process line.

Said coking process as an example may be performed by pyrolysis in which pure hydrogen and carbon may be generated by separating hydrocarbons in a plasma burner at around 1600°C.

The mobile apparatus according to the present invention allows for the steps outlined to be performed continuously. This continuous operation allows for biochar to be distributed across the area from which the wood was originally harvested. This allows the method to be highly efficient as the mobile apparatus is not required to revisit an area to distribute the generated biochar.

Furthermore, the mobile apparatus converts heat generated by the coking unit into operating power for the processing units which allows the generating unit to further recycle energy generated by the coking unit. This reduces the amount of energy needed to be generated for the operation of the mobile apparatus. This increased efficiency could reduce the carbon footprint of the mobile apparatus.

According to a preferred embodiment of the present invention, each processing unit includes a separate driving unit. Separate driving units offer the additional advantage that each unit may be operated individually if necessary. For example, this may be beneficial for storage of the movable apparatus.

Each of the driving units may include a continuous track such as a caterpillar track. This allows the weight of the driving units to be distributed more evenly. This is highly advantageous over terrain which is uneven such as the ground of a forest.

Each processing unit is preferably floatable i.e. has the ability to float in a body of liquid, and/or has a climbing ability i.e. has the ability to climb over objects or traverse terrain that could impede the movement of the mobile apparatus. This is advantageous as forest environments often feature rough terrain and it is of significant benefit if the processing units to not need to maneuver around obstacles. The environments in which the mobile apparatus is required to function may also feature sloped ground and thus the climbing ability may allow the processing units to function on said ground despite a gradient.

Preferably, the coking unit includes a continuous conveyer furnace, more preferably the continuous conveyer furnace comprises a screw conveyor. This allows the process of the mobile apparatus to remain continuous such that all units may be operating simultaneously and thus efficiency is improved.

The squeezing unit is arranged between the shredding unit and the coking unit, wherein the squeezing unit is adapted to dry the shredded woods.

The use of squeezing as a drying method is advantageous as it is a highly efficient method in which drying may be performed without requiring the wood to be heated and thus potentially release some of the carbon stored within the wood into the atmosphere. It is also much quicker than regular drying. The extracted liquid may be then distributed to the soil.

The processing units are preferably powered by an energy conversion unit which is connected to the coking unit such that heat generated by the coking unit is converted to operating power for the processing units. This allows the generating unit to further recycle energy generated by the coking unit. Thus reduces the amount of energy needed to be generated for the operation of the mobile apparatus. This increased efficiency could reduce the carbon footprint of the mobile apparatus.

Preferably, the mobile apparatus comprises a crew unit providing accommodation for operating personnel, the crew unit being connected to one of the processing units. This may comprise food and beverage area and/or washroom facilities and/or a sleeping area and/or a maintenance area. This provides a unit in which the crew may reside when not operating the mobile apparatus. Such a unit may allow the mobile apparatus to be run continuously with multiple crews working in shifts. A further advantage of the crew unit providing accommodation is that the crew may reside onboard the mobile apparatus. This allows the mobile apparatus to cover a greater range of forest as it removes the need to operate near an area suitable for crew to reside.

According to one embodiment, there is a method for improving the fertility of the soil comprising the following method steps:
a') Detecting fully grown trees in a forest by a detecting unit;
b') Selectively harvesting the detected trees by a harvesting unit;
c') Shredding the wood of the harvested trees by a shredding unit; and
d') Inserting the shredded wood by an insertion unit into the soil of the forest;

At least steps a' - d' are performed continuously within a mobile vehicle, the mobile vehicle comprising at least the harvesting unit, the shredding unit and the insertion unit.

Preferably the vehicle comprises also the detecting unit as a physical part of the vehicle. It is possible to use a remote detecting unit that is not physical part of the vehicle but sends information to the vehicle that allow to select the trees to be harvested.

Preferably the wood is inserted into the soil such that the water content in the wood is maintained. Moreover, the insertion should be carried out in such a manner that oxygen of the air causes minimal oxidation of the carbon stored in the wood and a only a minimum of metabolism is possible.

Preferably other parts of the tree such as leaves, branches and bark are inserted into the soil to improve the fertility of the soil.

### Figures

The invention is described in further detail below with regard to the accompanying drawings in which
- Fig. 1: shows an illustration of the current human-made CO2 emissions cycle.
- Fig. 2: shows an illustration of the reduction of CO2 emissions in the atmosphere.

- Fig. 3: shows a side view of an embodiment of the current invention.
- Fig. 4: shows a proposal for implementation of the inventive process.

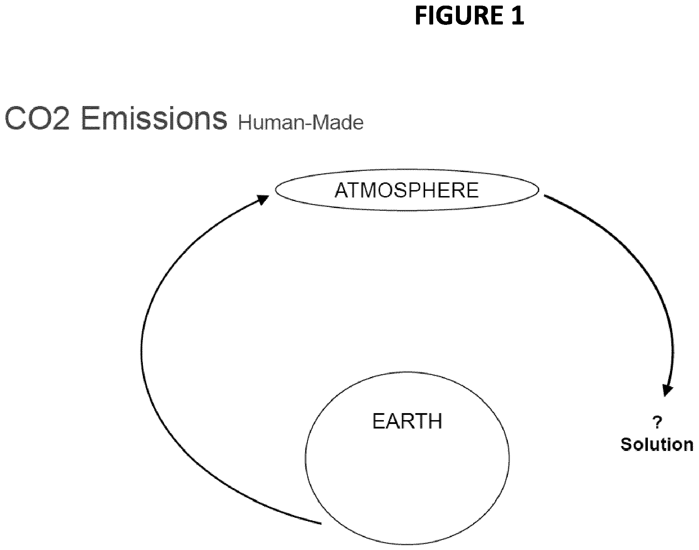

In Fig. 1 the cycle of Human-made CO2 emissions is outlined. The arrows on the illustration represent CO2 and clearly show the CO2 being emitted from EARTH caused by human made means, for example by the burning of fossil fuels, and transferred to the atmosphere. The "solution" of fig. 1 is the solution required to solve the problem of how to remove CO2 once it has entered the atmosphere.

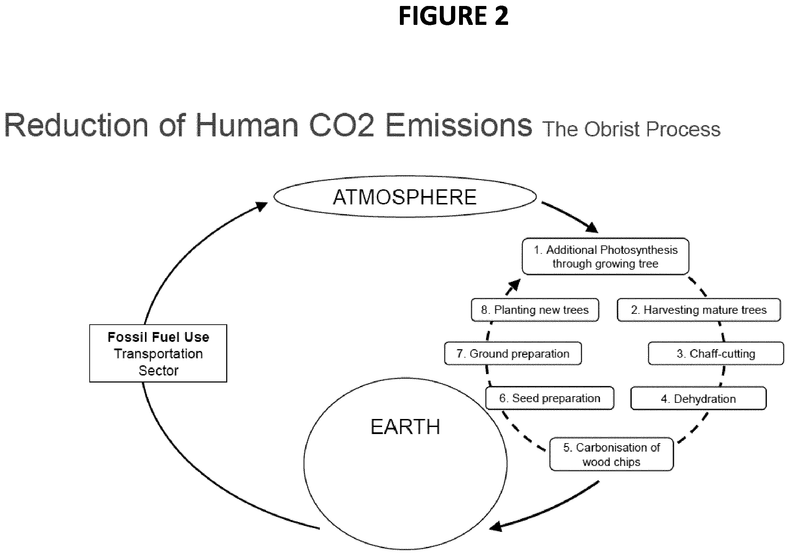

In Fig. 2 a more detailed look at the Human-made CO2 emissions cycle is provided including a method for removing CO2 from the atmosphere. The method includes the steps of:
1. Additional Photosynthesis through growing trees,
2. Harvesting mature trees,
3. Chaff-cutting i.e. the removal of branches and leaves,
4. Dehydration of the harvested woods,
5. Carbonisation of wood chips which are then placed back into the earth thereby sealing away some of the carbon in the atmosphere,
6. Seed preparation,
7. Ground preparation,
8. Planting new trees.

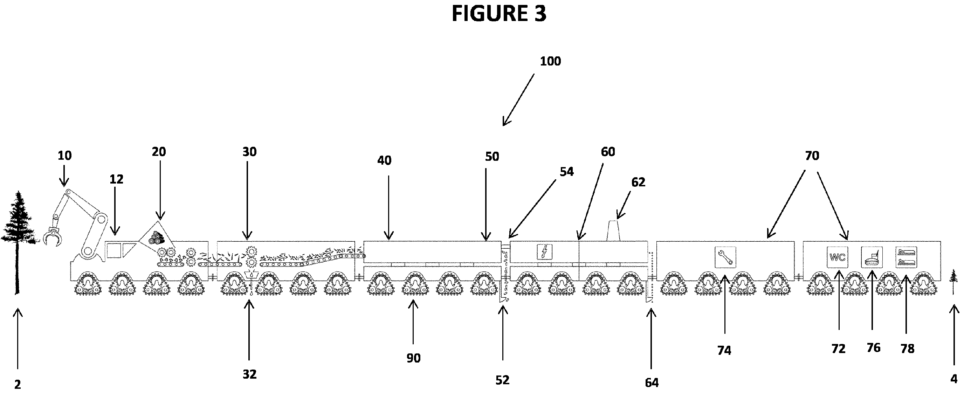

Fig. 3 shows a mobile vehicle according to an embodiment of the current invention. The interconnecting processing units may be seen along with electrical connections of each processing unit to the electrical generator (62) and fluid transportation means (36) running from the squeezing unit (30) for expulsion of excess liquid.

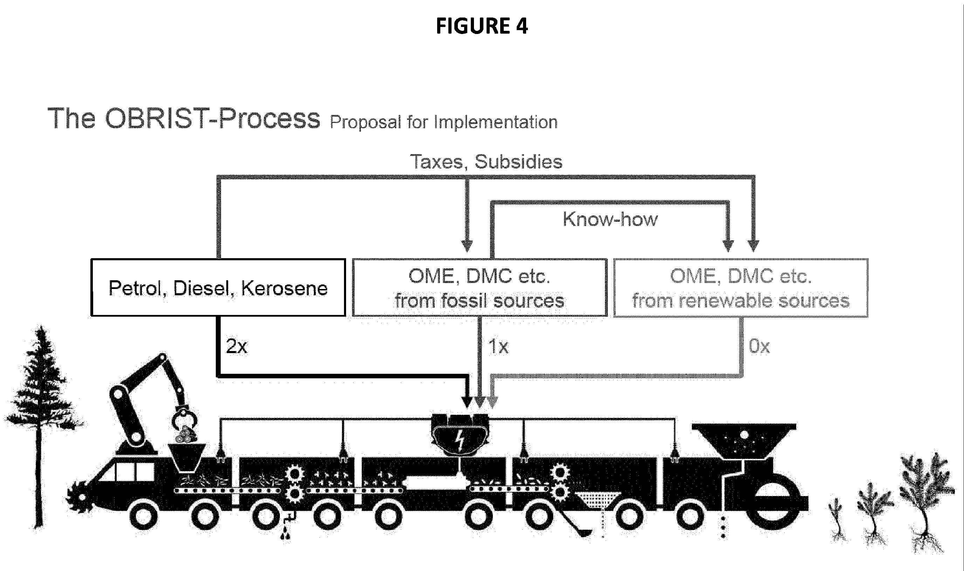

Fig. 4 outlines an implementation proposal and is a business model outlining certain subsidies and taxes associated with different types of fuel.

Embodiments of the mobile apparatus (100) generally comprise (as shown in Fig. 3) a multitude of connected processing units formed in a continuous line of carriages. Each carriage may include one or more processing unit. Each processing unit may be contained in one or more carriages. Each carriage may include a driving unit. A processing unit may be one of: a harvesting unit (10), a shredding unit (20), a squeezing unit (30), a coking unit (40), an insertion unit (50), and energy conversion unit (60) and a crew unit (70).

The harvesting unit (10) is contained in the front carriage of the vehicle and comprises machinery capable of harvesting plants (2) in front of the vehicle. This may comprise using one and/or multiple pieces of machinery capable of removing the plant (2) from the ground and/or chopping the plant (2) into smaller pieces and/or removing roots from the ground and/or separating branches and leaves from the wood.

The shredding unit (20) is connected to the harvesting unit (10) and may both be contained in the front carriage of the mobile apparatus (100). The shredding unit (20) performs shredding of the wood into pieces of a desired size by for example a wood chipping machine. The shredding unit (20) may also be capable of shredding branches and leaves separately to the wood and directly conveying shredded branches and leaves to the soil.

Also contained in the front carriage may be an operator cabin (12). In the operator cabin (12) an operator may control the operation of the harvesting machinery. The operator may also control the overall movement of the mobile apparatus (100) via driving units.

The squeezing unit (30) may be connected to the shredding unit (20) and may be contained in a separate carriage. The squeezing unit (30) is responsible for drying of the shredded wood for example via a wood compressor. Any liquid removed from the shredded wood can be collected in a fluid collection system (32). This liquid may then be distributed back onto the soil by releasing a tap on the fluid collection system (32).

Freshly harvested trees have a water content of roughly 50-60%. The squeezing unit dries the harvested wood so that it may have a moisture content of 20% or ideally 12%.

The coking unit (40) may be connected to the squeezing unit (30) and may be contained in a separate carriage. Under lack of oxygen the squeezed wood is heated to roughly 400°C via pyrolysis. Such a process is exothermic and gives off heat which may be converted by an electrical generator (62) into electricity for powering the mobile apparatus (100). The process produces biochar, a material of high carbon content (up to roughly 90%).

The coking unit (40) may include a continuous furnace, preferably comprising a screw conveyor which allows for a continuous and more efficient process.

The overall process is performed in such a way as to allow a high proportion of carbon to be applied to the soil in the form of carbonization of wood and/or tree residues and/or (forest) soil parts. This process leads to a deliberate activation of the humus formation and thus to the further increase of the carbon storage of the soil.

The insertion unit (50) may be connected to the coking unit (40) and contained in a separate carriage. The insertion unit (50) ensures that the biochar generated by the coking process is inserted back into the soil via insertion tool (52). The biochar is inserted into the soil at a depth that has been determined it will yield the greatest results in fertilisation improvement. The insertion unit (50) may also be capable of ploughing and/or seed planting (64) and/or soil flattening. The insertion unit (50) therefore allows regrowth of plants within a matter of years (4).

The energy conversion unit (60) may be connected to the insertion unit (50) and contained in a separate carriage. Connected to both the insertion unit (50) and energy conversion unit (60) may be a heat exchanger (54). The heat exchanger (54) is capable of providing the heat generated in the coking process to the electrical generator (62) such that heat may be converted into power for the mobile apparatus (100).

Such a conversion allows the mobile apparatus (100) to be independent. The mobile apparatus (100) may run off power generated by the mobile apparatus (100) and thus is not required to return to a location for refuelling.

The crew unit (70) may be connected to the energy conversion unit (60) and contained in one or more separate carriages. The crew unit (70) may include washroom facilities (72) and/or a maintenance area (74) and/or a food and beverage area (76) and/or a sleeping area (78). This crew carriage allows for further independence of the mobile apparatus (100) as the operating personnel may remain on board.

Each processing unit may include a separate driving unit such that each unit may be driven separately. Each driving unit may comprise one or more, preferably four pairs of continuous track (90). Said continuous track (90) may be a caterpillar track and provides a greater surface area for crossing uneven ground. The continuous track (90) is also more robust than tyres and is more suited to a forest environment.

The overall process of the mobile apparatus (100) is generally performed in strips which are preferably equal to, or smaller, in width than the maximum height of the surrounding trees. This protects the soil, allowing it to be better prepared for regrowth whilst additionally disrupting animal habitats as little as possible. The typical distance between processed strips is usually 40/50 times the width of said strip. The driving speed of the mobile apparatus (100) may be approximately 1-2 metres per minute.

The apparatus is narrow enough to operate in a forest and to navigate through the trees to reach selected trees to be cut. The vehicle width should preferably be in a range from about 1000 mm to 3000 mm. Larger or smaller dimensions are possible, e.g. from about 1500 mm to 2500 mm. A person skilled in the art is able to select a proper vehicle width that is suitable for the respective forest where the vehicle is operated, e.g. on the basis of an average distance of the trees of said forest.

The vehicle width is disclosed also in connection with the method of claim 1 and the apparatus of claim 4.

In general, the harvesting of the trees and the insertion of the shredded wood from said trees into the soil and hence the entire processing is realized by one and the same apparatus. This holds for the entire application.

The apparatus can be realized as a multi-part or a single part vehicle. Long vehicles should be realized as multi-part vehicles with several flexibly coupled carriages to maneuver the vehicle between the trees.

According to a further embodiment the apparatus can be adapted to separately process different portions of the tree (crown, trunk, bark and root). Moreover, the insertion depths into the soil can vary to optimize the storage of carbon during a longer period of time and/or to improve humus formation caused by the insertion. The improved humus formation provides for an increased capacity of the soil to accommodate biomass (mainly microbes). Thereby the amount of carbon stored in the soil is increased. Hence, two factors determine the carbon storage in the soil, namely the carbon bound by shredded wood inserted into the soil and the increased capacity of the soil to accommodate biomass, wherein the latter can be significantly more relevant and effective.

The apparatus can be equipped with an optical and/or electromagnetic sensor system that detects and analyzes the existing forest structure. A control system can be provided that includes forest parameters and decides which trees are to be harvested. The control system determines in advance how the exposure of the remaining trees to sunlight can be improved and at which place the insertion into the soil is optimal.

## Claims

1. Method for improving the fertility of the soil comprising the following method steps:
a) Harvesting wood in a forest by a harvesting unit to form an open area for growing plants, in particular trees;
b) Shredding the harvested wood by a shredding unit;
b1) Subjecting the shredded wood to a drying treatment by squeezing the shredded wood in a squeezing unit;
c) Coking the shredded wood by a coking unit to form biochar;
d) Inserting the biochar by an insertion unit into the soil of the open area formed in step a;
wherein
at least steps a - d are performed continuously within a mobile vehicle, the mobile vehicle comprising at least the harvesting unit, the shredding unit, the coking unit and the insertion unit.

2. Method according to claim 1,
**characterized in that**
the shredded wood is dried to reduce the moisture content to less than 30%, in particular less than 20%, in particular less than 10%.

3. Method according to any of the preceding claims,
**characterized in that**
branches and leaves of trees are separated in step a, shredded and directly conveyed to the soil.

4. Mobile apparatus for improving the fertility of the soil having a plurality of interconnected processing units comprising at least
- a harvesting unit for harvesting wood in a forest to form an open area for growing plants;
- a shredding unit for shredding the harvested wood;
- a coking unit for coking the shredded wood to form biochar;
- an insertion unit for inserting the biochar into the soil of the open area; and
- an energy conversion unit for converting the heat generated by the coking unit into operating power for the processing units;
wherein the interconnected processing units form a continuous process line, and wherein a squeezing unit is arranged between the shredding unit and the coking unit, the squeezing unit being adapted to dry the shredded wood.

5. Mobile apparatus according to claim 4,
**characterized in that**
the mobile apparatus includes multiple driving units.

6. Mobile apparatus according to claim 5,
**characterized in that**
each driving unit includes a continuous track.

7. Mobile apparatus according to any of claims 4 to 6,
**characterized in that**
the coking unit includes a continuous conveyer furnace, the continuous conveyer furnace preferably comprising a screw conveyor.

8. Mobile apparatus according to any of claims 4 to 7,
**characterized in that**
the processing units are powered by an energy conversion unit which is connected to the coking unit such that heat generated by the coking unit is converted to operating power for the processing units.

9. Mobile apparatus according to any of claims 4 to 8, further comprising a crew unit providing accommodation for operating personnel, the crew unit being connected to one of the processing units.

## Patentansprüche

1. Verfahren zur Verbesserung der Bodenfruchtbarkeit die folgenden Verfahrensschritte umfassend:
a) Ernten von Holz in einem Wald durch eine Ernteeinheit, um einen offenen Bereich zum Anpflanzen von Pflanzen, insbesondere Bäumen, zu bilden;
b) Häckseln des geernteten Holzes mittels einer Häckseleinheit;
b1) Unterziehen des gehäckselten Holzes einer Trocknungsbehandlung durch Auspressen des gehäckselten Holzes in einer Auspresseinheit;
c) Verkoken des gehäckselten Holzens durch ein Verkokungseinheit, um Biokohle zu bilden;
d) Einführen der Biokohle durch eine Einführungseinheit in den Erdboden des offenen Bereichs, der in Schritt a gebildet wurde;
wobei
wenigstens die Schritte a bis d durchgängig innerhalb eines mobilen Fahrzeugs vorgenommen werden, wobei das mobile Fahrzeug wenigstens die Ernteeinheit, die Häckseleinheit, die Verkokungseinheit und die Einführungseinheit umfasst.

2. Verfahren nach dem Anspruch 1,
**dadurch gekennzeichnet, dass**
das gehäckselte Holz getrocknet wird, um den Feuchtanteil auf weniger als 30 %, insbesondere weniger als 20 %, insbesondere weniger als 10 % zu verringern.

3. Verfahren nach einem beliebigen der vorstehenden Ansprüche,
**dadurch gekennzeichnet, dass**
Äste und Blätter von Bäumen in Schritt a getrennt, gehäckselt und direkt in den Erdboden befördert werden.

4. Mobile Vorrichtung zur Verbesserung der Bodenfruchtbarkeit,
die mehrere miteinander verbundene Verarbeitungseinheiten aufweist, darunter wenigstens
- eine Ernteeinheit zum Ernten von Holz in einem Wald, um einen offenen Bereich zum Anpflanzen von Pflanzen zu bilden;
- eine Häckseleinheit zum Häckseln des geernteten Holzes;
- eine Verkokungseinheit zum Verkoken des gehäckselten Holzes, um Biokohle zu bilden;
- eine Einführungseinheit zum Einführen der Biokohle in den Erdboden des offenen Bereichs;
und
- eine Energieumwandlungseinheit zum Umwandeln der Wärme, die durch die Verkokungseinheit erzeugt wird, in Antriebsenergie für die Verarbeitungseinheiten;
wobei die miteinander verbundenen Verarbeitungseinheiten eine durchgehende Verarbeitungslinie bilden und wobei eine Auspresseinheit zwischen der Häckseleinheit und der Verkokungseinheit angeordnet ist, wobei die Auspresseinheit ausgelegt ist, um das gehäckselte Holz zu trocknen.

5. Mobile Vorrichtung nach Anspruch 4,
**dadurch gekennzeichnet, dass**
die mobile Vorrichtung mehrere Antriebseinheiten einschließt.

6. Mobile Vorrichtung nach Anspruch 5,
**dadurch gekennzeichnet, dass**
jede Antriebseinheit einen durchgehenden Kettenstrang einschließt.

7. Verfahren nach einem beliebigen der Ansprüche 4 bis 6,
**dadurch gekennzeichnet, dass**
die Verkokungseinheit einen Ofen mit durchgehender Förderung einschließt, wobei der Ofen mit durchgehender Förderung vorzugsweise einen Schneckenförderer umfasst.

8. Mobile Vorrichtung nach einem beliebigen der Ansprüche 4 bis 7,
**dadurch gekennzeichnet, dass**
die Verarbeitungseinheiten durch eine Energieumwandlungseinheit, die mit der Verkokungseinheit verbunden ist, so dass Wärme, die durch die Verkokungseinheit erzeugt wird, in Antriebsenergie für die Verarbeitungseinheiten umgewandelt wird, mit Energie versorgt werden.

9. Mobile Vorrichtung nach einem beliebigen der Ansprüche 4 bis 8, ferner eine Mannschaftseinheit umfassend, die Unterbringung für Bedienpersonal bereitstellt, wobei die Mannschaftseinheit mit einer der Verarbeitungseinheiten verbunden ist.

## Revendications

1. Procédé pour améliorer la fertilité du sol, comprenant les étapes suivantes du procédé :
a) la récolte de bois dans une forêt par une unité de récolte pour former une zone ouverte pour faire pousser des végétaux, en particulier des arbres ;
b) le déchiquetage du bois récolté par une unité de déchiquetage ;
b1) la soumission du bois déchiqueté à un traitement de séchage par pressage du bois déchiqueté dans une unité de pressage ;
c) la cokéfaction du bois déchiqueté par une unité de cokéfaction pour former du biocharbon ;
d) l'introduction, par une unité d'introduction, du biocharbon dans le sol de la zone ouverte formée à l'étape a ;
dans lequel au moins les étapes a-d sont réalisées en continu dans un véhicule mobile, le véhicule mobile comprenant au moins l'unité de récolte, l'unité de déchiquetage, l'unité de cokéfaction et l'unité d'introduction.

2. Procédé selon la revendication 1,
**caractérisé en ce que** le bois déchiqueté est séché pour réduire la teneur en humidité à moins de 30%, en particulier à moins de 20%, en particulier à moins de 10%.

3. Procédé selon l'une quelconque des revendications précédentes,
**caractérisé en ce que** des branches et feuilles des arbres sont séparées à l'étape a, déchiquetées, et directement amenées dans le sol.

4. Appareil mobile pour améliorer la fertilité du sol, ayant une pluralité d'unités de traitement raccordées entre elles, comprenant au moins :
- une unité de récolte pour récolter du bois dans une forêt pour former une zone ouverte pour faire pousser des végétaux ;
- une unité de déchiquetage pour déchiqueter le bois récolté ;
- une unité de cokéfaction pour cokéfier le bois déchiqueté pour former du biocharbon ;
- une unité d'introduction pour introduire le biocharbon dans le sol de la zone ouverte ; et
- une unité de conversion d'énergie pour convertir la chaleur générée par l'unité de cokéfaction en une puissance de fonctionnement pour les unités de traitement ;
dans lequel les unités de traitement interconnectées forment une chaîne de traitement continue, et dans lequel une unité de pressage est disposée entre l'unité de déchiquetage et l'unité de cokéfaction, l'unité de pressage étant adaptée pour sécher le bois déchiqueté.

5. Appareil mobile selon la revendication 4,
**caractérisé en ce que** l'appareil mobile comprend de multiples unités motrices.

6. Appareil mobile selon la revendication 5,
**caractérisé en ce que** chaque unité motrice comprend une chenille continue.

7. Appareil mobile selon l'une quelconque des revendications 4 à 6,
**caractérisé en ce que** l'unité de cokéfaction comprend un four à transporteur continu, le four à transporteur continu comprenant de préférence un transporteur à vis.

8. Appareil mobile selon l'une quelconque des revendications 4 à 7,
**caractérisé en ce que** les unités de traitement sont alimentées par une unité de conversion d'énergie qui est raccordée à l'unité de cokéfaction de sorte que la chaleur générée par l'unité de cokéfaction est convertie en puissance de fonctionnement pour les unités de traitement.

9. Appareil mobile selon l'une quelconque des revendications 4 à 8, comprenant en outre une unité d'habitacle fournissant un hébergement pour du personnel de service, l'unité d'habitacle étant raccordée à l'une des unités de traitement.
